# FASCICULE DE BREVET EUROPEEN

(11) **EP 4 112 859 B1**
(45) Date de publication et mention de la délivrance du brevet: **21.02.2024**
(21) Numéro de dépôt: 22181726.5
(22) Date de dépôt: 29.06.2022
(51) Int. Cl.: E05F 15/611, E05F 15/63, H02P 3/12, H02P 5/68, H02P 7/03

(54) **DISPOSITIF D'ENTRAÎNEMENT MOTORISÉ POUR UNE INSTALLATION DOMOTIQUE DE FERMETURE**
MOTORISIERTE ANTRIEBSVORRICHTUNG FÜR EINE HAUSSCHLIESSANLAGE
MOTORISED DRIVE DEVICE FOR A HOME AUTOMATION INSTALLATION

(30) Priorité: 30.06.2021 FR 2107083
(43) Date de publication de la demande: 04.01.2023
(73) Titulaire: Somfy Activites SA, 74300 Cluses (FR)
(72) Inventeur: MOLINIER, Jérôme, 74300 Cluses (FR); SAURIN, Lionel, 74300 Cluses (FR)
(74) Mandataire: Lavoix

(56) Documents cités:
- EP-B1- 1 229 628
- FR-A1- 3 083 813
- FR-B1- 3 068 063

## Description

De manière générale, la présente invention concerne le domaine des installations domotiques de fermeture, par exemple pour des portails battants, l'installation domotique de fermeture comprenant un dispositif d'entraînement motorisé mettant en mouvement deux écrans suivant un mouvement de rotation.

Le dispositif d'entraînement motorisé permet de mettre en mouvement les écrans, entre au moins une première position et au moins une deuxième position.

Le dispositif d'entraînement motorisé comprend un actionneur électromécanique d'un élément mobile de fermeture, tel qu'un portail, une grille ou tout autre matériel équivalent, appelé par la suite écran.

Comme exemple de dispositif d'entraînement motorisé, on connaît déjà le brevet FR 3068063 B1 qui décrit un dispositif d'entraînement motorisé d'un portail battant, qui comprend au moins un écran.

Le dispositif d'entraînement motorisé comprend un actionneur électromécanique, qui comprend un moteur électrique et un système de transmission de mouvement, afin de déplacer le ou les écrans du portail battant entre des positions ouverte et fermée.

On connaît de plus de FR 3 083 813 A1 un dispositif d'entraînement motorisé pour une installation domotique de fermeture comprenant un portail battant avec un premier écran et un deuxième écran, chacun des écrans étant entraîné par un actionneur électromécanique avec moteur électrique.

Un problème qui se pose avec les dispositifs d'entraînement motorisés connus est que, dans le cas d'installations comportant un dispositif d'entraînement motorisé de type réversible, il peut être nécessaire de maintenir le dispositif d'entraînement motorisé au moins partiellement alimenté même lorsque l'écran est en position fermée.

Cela permet de détecter tout mouvement de l'écran pouvant avoir une origine extérieure, comme un déplacement accidentel, par exemple un déplacement causé par un coup de vent ou par une intrusion.

Le but est de pouvoir ensuite corriger ce déplacement, par exemple en appliquant une tension électrique pour piloter les moteurs électriques afin de replacer l'écran en position fermée si besoin.

Cette détection de mouvement est réalisée en surveillant l'apparition d'une tension électrique aux bornes du ou des moteurs électriques.

Un inconvénient est que cette surveillance crée une surconsommation d'énergie électrique.

En effet, dans les dispositifs d'entraînement motorisés utilisés dans les installations domotiques connues, il est courant qu'au moins un relais, qui sert normalement à régler le sens de rotation du moteur, soit maintenu dans un état excité afin de maintenir les bobines des moteurs connectées au circuit d'alimentation électrique si l'on veut pouvoir mettre en oeuvre cette surveillance.

Cela conduit donc à une surconsommation d'énergie électrique, même lorsque le dispositif d'entraînement motorisé et/ou le dispositif électronique de contrôle pilotant l'installation domotique est en veille (dans un mode de fonctionnement au repos).

Outre le coût financier et environnemental que cela engendre, une telle situation va à l'encontre des nouvelles normes qui imposent un seuil maximal de consommation électrique lorsque l'installation domotique fonctionne dans en mode de veille.

C'est à ces inconvénients qu'entend plus particulièrement remédier l'invention en proposant un dispositif d'entraînement motorisé pour une installation domotique de fermeture permettant de détecter un déplacement d'au moins un écran par rapport à une position fermée avec une consommation électrique réduite.

A cet effet, un aspect de l'invention concerne un dispositif d'entraînement motorisé pour une installation domotique de fermeture comportant :
- un premier actionneur électromécanique, le premier actionneur électromécanique comprenant un premier moteur électrique et étant configuré pour entraîner en mouvement le premier écran,
- un deuxième actionneur électromécanique, le deuxième actionneur électromécanique comprenant un deuxième moteur électrique et étant configuré pour entraîner en mouvement le deuxième écran, et
- un dispositif électronique de contrôle, le dispositif électronique de contrôle comprenant au moins un circuit d'alimentation électrique, le circuit d'alimentation électrique comprenant au moins :
   - des premiers éléments de connexion électrique, les premiers éléments de connexion électrique étant configurés pour connecter électriquement un premier moteur électrique d'un premier actionneur électromécanique au circuit d'alimentation électrique,
   - des deuxièmes éléments de connexion électrique, les deuxièmes éléments de connexion électrique étant configurés pour connecter électriquement un deuxième moteur électrique d'un deuxième actionneur électromécanique au circuit d'alimentation électrique, et
   - des éléments de commutation électrique ; les éléments de commutation électrique étant configurés pour être commutés entre un état d'excitation et un état de repos,
      dans lequel le circuit d'alimentation électrique est configuré pour connecter électriquement les premier et deuxième moteurs électriques tête-bêche par l'intermédiaire des éléments de commutation électrique,
   - lorsque le premier moteur électrique est connecté électriquement aux premiers éléments de connexion électrique et que le deuxième moteur électrique est connecté électriquement aux deuxièmes éléments de connexion électrique, et
   - lorsque les éléments de commutation électrique sont commutés dans l'état de repos,
et dans lequel le circuit d'alimentation électrique est configuré pour détecter un déplacement d'au moins un des écrans à partir d'une mesure de la tension électrique entre au moins l'un des éléments de connexion électrique et une référence de tension du circuit d'alimentation électrique, lorsque les éléments de commutation électrique sont commutés dans l'état de repos.

Selon des aspects avantageux mais non obligatoires, un tel dispositif peut incorporer une ou plusieurs des caractéristiques suivantes, prises isolément ou suivant toute combinaison techniquement admissible :

Selon un autre aspect, le dispositif de contrôle électronique est également configuré pour, lorsqu'un déplacement inopiné d'au moins un des écrans a été détecté, envoyer un signal de commande pour actionner au moins un moteur électrique de façon à corriger la position de l'écran.

Selon un autre aspect, le circuit d'alimentation électrique comprend un premier circuit de mesure de tension et un deuxième circuit de mesure de tension connectés respectivement à un premier point de raccordement commun entre certains desdits éléments de connexion électrique et la référence de tension du circuit d'alimentation électrique, et un deuxième point de raccordement commun entre les autres éléments de connexion électrique et la référence de tension du circuit d'alimentation électrique.

Selon un autre aspect, chacun desdits circuits de mesure de tension comprend un pont diviseur de tension.

Selon un autre aspect, le dispositif d'entraînement motorisé est un dispositif réversible.

Selon un autre aspect, le dispositif d'entraînement motorisé est configuré pour fonctionner dans un mode de fonctionnement en veille à basse consommation d'énergie électrique, la détection de mouvement étant mise en oeuvre lorsque le dispositif d'entraînement motorisé est dans le mode de fonctionnement en veille.

Selon un autre aspect, en veille, l'un des deux moteurs électriques est utilisé comme charge électrique, afin de freiner l'autre moteur électrique, tout en permettant la mesure de la tension commune aux bornes des moteurs, les relais étant dans l'état de repos.

Selon un autre aspect, l'invention concerne une installation domotique de fermeture comportant deux écrans et un dispositif d'entraînement motorisé tel que décrit.

Selon un autre aspect, les écrans comprennent au moins un battant mobile en rotation autour d'un arbre de rotation essentiellement vertical.

Selon un autre asprect, les écrans sont des portails battants ou des volets battants.

Selon un autre aspect, les moteurs sont des moteurs électriques à courant continu.

Selon un autre aspect, l'invention concerne un procédé de commande d'un dispositif d'entraînement motorisé tel que décrit ci-dessus, ce procédé comportant des étapes consistant à :
- déplacer au moins un des écrans dans une position prédéterminée, telle qu'une position d'extrémité, au moyen du dispositif d'entraînement motorisé
- lorsque ledit au moins un des écrans est dans la position d'extrémité et que le dispositif d'entraînement motorisé est dans un mode de veille, dans lequel les moteurs ne sont pas commandés, détecter un déplacement dudit au moins un des écrans en détectant l'apparition d'une tension électrique entre au moins l'un des éléments de connexion électrique et une référence de tension du circuit d'alimentation électrique, lorsque les éléments de commutation électrique sont commutés dans l'état de repos.

L'invention sera mieux comprise et d'autres avantages de celle-ci apparaîtront plus clairement à la lumière de la description qui va suivre d'un mode de réalisation d'un dispositif d'entraînement motorisé d'un portail battant et d'un procédé de commande associé, donnée uniquement à titre d'exemple et faite en référence aux dessins annexés, dans lesquels :
[Fig 1] la figure 1 représente schématiquement, selon une vue de dessus, une installation domotique de fermeture conforme à un mode de réalisation de l'invention, l'installation domotique de fermeture comportant un dispositif d'entraînement motorisé conforme à l'invention ;
[Fig 2] la figure 2 est une vue schématique d'un module de commande électronique du dispositif d'entraînement motorisé de la figure 1 selon un mode de réalisation ;
[Fig 3] la figure 3 est un schéma électrique d'un mode de réalisation d'un circuit d'alimentation électrique du dispositif d'entraînement motorisé de la figure 1 ;
[Fig 4] la figure 4 est un schéma électrique d'un mode de réalisation qui ne fait pas partie de l'invention d'un circuit d'alimentation électrique du dispositif d'entraînement motorisé de la figure 1 ;
[Fig 5] la figure 5 est un schéma électrique équivalent représentant le comportement équivalent du circuit d'alimentation électrique de la figure 3 lorsque le dispositif est dans un mode de fonctionnement de surveillance de l'état de l'ouvrant.
[Fig 6] la figure 6 est un organigramme d'un exemple d'un procédé de commande du dispositif d'entraînement motorisé de la figure 1 selon un mode de réalisation de l'invention.

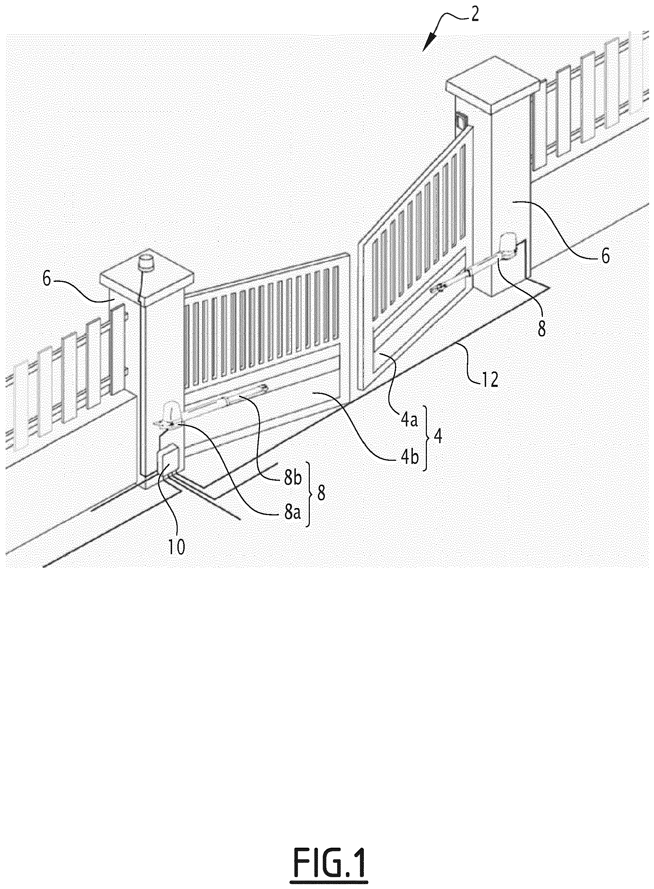

On décrit tout d'abord, en référence à la figure 1, un exemple d'une installation domotique de fermeture conforme à un mode de réalisation de l'invention.

De façon générale, l'installation domotique de fermeture comprend deux écrans, tels que des montants de portail, pour fermer sélectivement une ouverture.

L'invention va être décrite en référence à des montants de portail, mais en variante d'autres modes de réalisation pourraient être envisagés pour accommoder des ouvertures de nature différente, par exemple avec des écrans de nature différente.

Par exemple, l'invention pourrait être utilisée pour déplacer deux volets battants servant à fermer une fenêtre d'un bâtiment.

Même si ces exemples alternatifs ne sont pas décrits ni illustrés dans un souci de concision, on comprend néanmoins que l'enseignement donné en référence au mode de réalisation décrit ci-après est transposable à ces exemples alternatifs.

Dans l'exemple illustré par la figure 1, l'installation domotique de fermeture 2 comprend un portail battant 4 monté sur des piliers ou supports fixes 6, et un dispositif d'entraînement motorisé.

Le portail battant 4 est installé au niveau d'une ouverture réalisée dans une clôture, de sorte que le portail battant 4 permet d'obturer sélectivement l'ouverture réalisée dans la clôture.

En variante, l'ouverture est réalisée dans un bâtiment ou une enceinte.

Le portail battant 4 de l'installation domotique de fermeture 2 est une barrière mobile par rotation horizontale.

Le dispositif d'entraînement motorisé comprend deux actionneurs électromécaniques 8, en particulier de type linéaire, d'autres types d'actionneurs pouvant cependant être utilisés.

Le portail battant 4 comprend deux écrans 4a et 4b qui sont de préférence montés symétriquement. Un actionneur 8 est associé à chaque écran 4a, 4b.

Ici, chaque écran 4a, 4b est monté oscillant (pivotant) autour d'un arbre de rotation vertical ou au moins essentiellement vertical, c'est-à-dire que chaque écran est mobile en rotation autour dudit arbre de rotation.

Par exemple, l'arbre de rotation est monté verticalement le long d'un des montants 6, qui peuvent être des piliers maçonnés, cet exemple étant donné à titre d'illustration.

En outre, l'actionneur électromécanique 8 est configuré pour déplacer l'écran 4a, 4b correspondant du portail battant 4.

Ainsi, l'écran 4a, 4b du portail battant 4 est entraîné en déplacement par le dispositif d'entraînement motorisé et, plus particulièrement, par l'actionneur électromécanique 8 correspondant.

Selon l'invention, le dispositif d'entraînement motorisé comprend deux actionneurs électromécaniques 8, chacun étant associé à un écran 4a, 4b du portail.

Le dispositif d'entraînement motorisé met en mouvement au moins un écran 4a, 4b du portail battant 4 entre au moins une première position et au moins une deuxième position, correspondant respectivement à une position fermée et à une position ouverte.

Chaque écran 4a, 4b est un élément mobile de fermeture, tel qu'un portail, une grille ou tout autre matériel équivalent.

Chaque actionneur électromécanique 8 comprend une première partie 8b reliée à l'écran et une deuxième partie 8a reliée à la clôture.

L'extrémité arrière de chaque actionneur électromécanique 8 est articulée sur un support fixe 6 de la clôture, tel qu'un pilier 6, de manière à osciller autour d'un arbre transversal sensiblement parallèle à l'arbre de rotation de l'écran 4a, 4b et proche de celui-ci.

Chaque écran 4a, 4b est entraîné par un actionneur électromécanique 8 et est mobile entre la position ouverte et la position fermée.

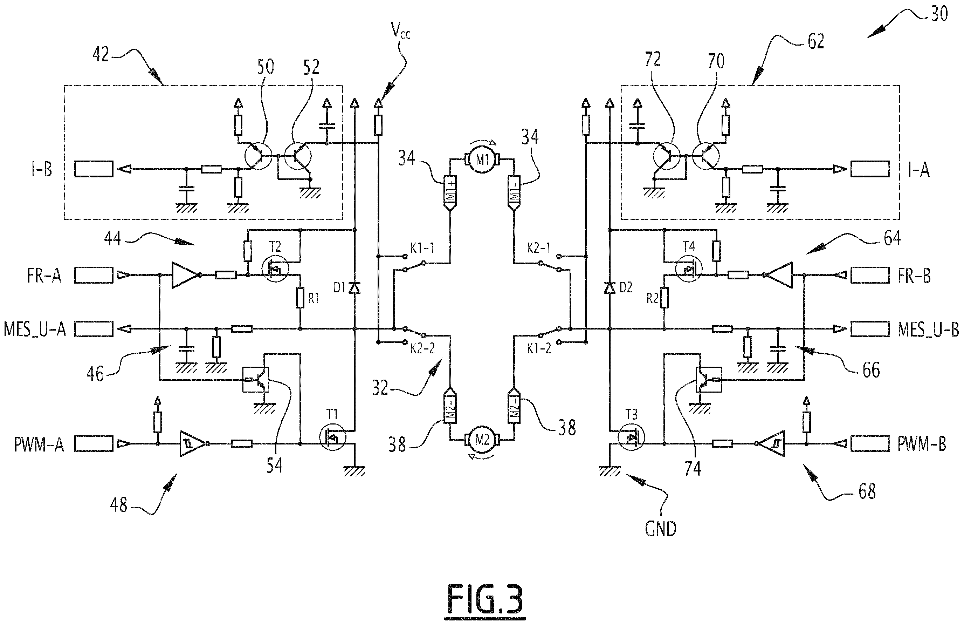

Chaque actionneur électromécanique 8 du dispositif d'entraînement motorisé comprend au moins un carter, un moteur électrique (notés M1 ou M2 sur la figure 3) et un système de transmission de mouvement.

Chaque écran 4a, 4b du portail battant 4 est entraîné par un actionneur électromécanique 8 et mobile entre la première position, fermée, et la deuxième position, ouverte.

Par exemple, l'actionneur électromécanique 8 correspond à l'un des actionneurs électromécaniques décrits dans le brevet FR 3068063 B1, d'autres exemples de réalisation étant néanmoins possibles.

En variante, par exemple, l'actionneur électromécanique 8 peut être un actionneur à bras rotatif, dans lequel le moteur électrique serait disposé avec un axe de rotation orienté verticalement.

Le dispositif d'entraînement motorisé comprend une unité électronique de contrôle 10.

Chaque actionneur électromécanique 8 est commandé par l'unité électronique de contrôle 10 du dispositif d'entraînement motorisé.

En pratique, l'unité électronique de contrôle 10 du dispositif d'entraînement motorisé peut être connectée aux actionneurs électroniques 8 par l'intermédiaires de conducteurs électriques 12, tels que des câbles.

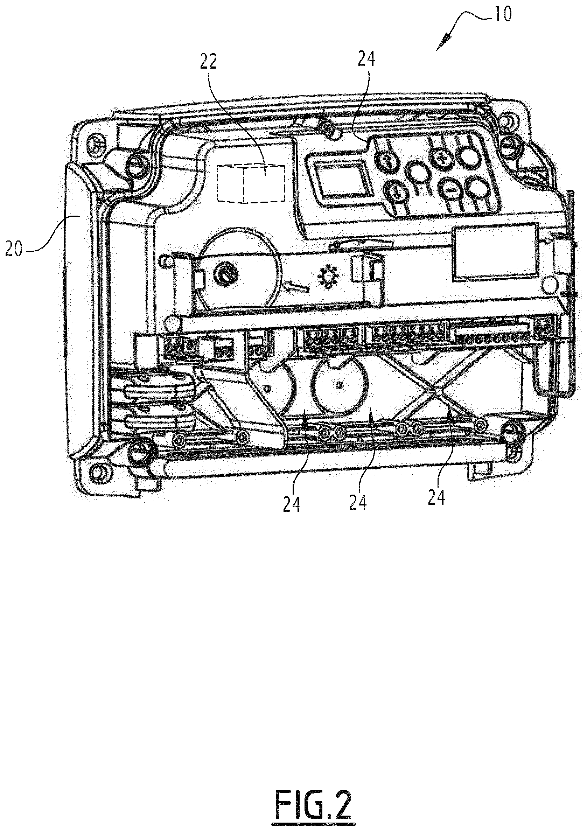

La figure 2 représente un exemple d'une unité électronique de contrôle 10 du dispositif d'entraînement motorisé.

L'unité électronique de contrôle 10, aussi nommée « dispositif électronique de contrôle », comprend généralement un boîtier 20 qui peut être installé dans l'installation domotique, par exemple fixé au pied d'un des piliers 6 comme dans l'exemple illustratif et non limitatif présenté dans la figure 1, étant entendu que de multiples autres configurations d'installation sont possibles en variante.

Dans de nombreux modes de réalisation, l'unité électronique de contrôle 10 du dispositif d'entraînement motorisé est implémentée par un ou par plusieurs circuits électroniques.

Par exemple, l'unité électronique de contrôle 10 comprend un processeur 22, tel qu'un microcontrôleur programmable ou un microprocesseur.

Le processeur 22 est couplé à une mémoire informatique, ou à tout support d'enregistrement de données lisible par ordinateur, qui comprend des instructions exécutables et/ou un code logiciel prévu pour mettre en oeuvre un procédé de pilotage du dispositif d'entraînement motorisé lorsque ces instructions sont exécutées par le processeur.

L'emploi du terme processeur ne fait toutefois pas obstacle à ce que, en variante, au moins une partie des fonctions du dispositif soient réalisées par d'autres composants électroniques, tels qu'un processeur de traitement du signal (DSP), ou un composant logique reprogrammable (FPGA), ou un circuit intégré spécialisé (ASIC), ou tout élément équivalent, ou toute combinaison de ces éléments.

L'unité électronique de contrôle 10 du dispositif d'entraînement motorisé est apte à mettre en fonctionnement le moteur électrique de chaque actionneur électromécanique 8 et, en particulier, permettre l'alimentation en énergie électrique du moteur électrique.

Ainsi, l'unité électronique de contrôle 10 du dispositif d'entraînement motorisé commande, notamment, le moteur électrique, de sorte à ouvrir ou fermer au moins un des écrans 4a, 4b du portail battant 2.

Dans un mode de réalisation, le dispositif d'entraînement motorisé comprend également une interface de commande 24 reliée fonctionnellement à l'unité électronique de contrôle 10.

Dans l'exemple représenté sur la figure 2, l'interface de commande 24 est intégré dans le boîtier 20 de l'unité électronique de contrôle 10.

En variante, l'interface de commande 24 pourrait être installée de façon déportée, par exemple dans un boîtier autre que le boîtier 20, cet autre boitier pouvant alors être relié à l'unité électronique de contrôle 10 par une ou plusieurs liaisons filaires et/ou non filaires, telles que des moyens de communications sans fils, par exemple des moyens de communication radiofréquence.

Pour une installation comprenant des actionneurs type vérin, par exemple tels que ceux décrits dans le brevet FR 3068063 B1 cité ci-dessus, l'unité électronique de contrôle 10 peut être localisée dans un boitier externe aux actionneurs.

En variante, dans le cas d'une installation domotique de fermeture comprenant des actionneurs à bras articulés, l'unité électronique de contrôle 10 peut être montée à l'intérieur d'un des actionneurs.

De préférence, l'interface de commande 24 comprend un clavier de commande pourvu d'éléments de sélection et, éventuellement, d'éléments d'affichage.

A titre d'exemples nullement limitatifs, les éléments de sélection peuvent être des boutons poussoirs ou des touches sensitives, les éléments d'affichage pouvant être des diodes électroluminescentes, et/ou un écran d'affichage électronique, par exemple un écran à cristaux liquides (LCD) ou un écran à diodes électroluminescentes organiques (OLED) ou toute technologie d'affichage appropriée.

L'interface de commande 24 permet à un utilisateur de régler des paramètres et/ou de commander le dispositif d'entraînement motorisé et, en particulier, de commander l'actionneur électromécanique 8 associé au portail battant 2, par un appui sur ou interaction avec l'un des éléments de sélection de l'interface de commande 24.

Dans des modes de réalisation optionnels mais néanmoins avantageux, l'interface de commande 24 peut comprendre, par exemple, une unité de commande locale, notamment une télécommande.

L'unité de commande locale peut être reliée, en liaison filaire ou non filaire, avec une unité de commande centrale.

L'unité électronique de contrôle 10 et le cas échéant, l'unité de commande locale ou l'unité de commande centrale peut (peuvent) alors être en communication avec une station météorologique située sur ou à proximité d'un terrain délimité par la clôture et incluant, notamment, un ou plusieurs capteurs pouvant être configurés pour déterminer, par exemple, une température, une vitesse de vent ou encore une luminosité.

Lorsque l'ouverture est ménagée dans une enceinte ou un bâtiment, cette station météorologique est déportée à l'extérieur de cette enceinte ou de ce bâtiment.

Le cas échéant, dans ces modes de réalisation, l'unité de commande centrale peut également être en communication avec un serveur informatique distant, de sorte à contrôler le dispositif d'entraînement motorisé suivant des données mises à disposition à distance par l'intermédiaire d'un réseau de communication, en particulier un réseau internet pouvant être relié au serveur informatique distant.

L'unité électronique de contrôle 10 peut également, de façon optionnelle, comprendre un module de réception d'ordres, en particulier d'ordres radioélectriques émis par un émetteur d'ordres, tel que ladite télécommande destinée à commander les actionneurs électromécaniques 8.

Ledit module de réception d'ordres peut également permettre la réception d'ordres transmis par des moyens filaires.

Le dispositif d'entraînement motorisé est configuré pour exécuter les commandes d'ouverture ou de fermeture du portail battant 2 de l'installation domotique de fermeture, pouvant être émises par l'interface de commande.

De façon générale, l'unité électronique de contrôle 10 comprend un circuit d'alimentation électrique configuré pour alimenter électriquement les moteurs électriques des actionneurs électromécaniques 8.

Dans l'exemple illustré, le boîtier 20 de l'unité électronique de contrôle 10 comprend des plages de raccordement 26 permettant de raccorder les liaisons 12 vers l'actionneur 8 ou vers les actionneurs 8.

La figure 3 représente un exemple d'un circuit d'alimentation électrique 30 de l'unité électronique de contrôle 10 pour alimenter les actionneurs électromécaniques 8.

Le circuit d'alimentation électrique 30 est plus particulièrement configuré pour alimenter électriquement un premier moteur électrique M1 du dispositif d'entraînement motorisé et, avantageusement, pour aussi alimenter électriquement un deuxième moteur électrique M2 du dispositif d'entraînement motorisé.

Le premier moteur fait partie d'un premier actionneur électromécanique 8 associé à un premier écran (tel que le premier montant 4a du portail 4) et le deuxième moteur M2 fait partie d'un deuxième actionneur électromécanique 8 associé à un deuxième écran (tel que le deuxième montant 4b du portail 4).

Dans de nombreux modes de réalisation, les moteurs M1 et M2 sont des moteurs électriques à courant continu (moteurs DC, pour « Direct Current » en anglais).

Par exemple, les moteurs M1 et M2 sont des moteurs DC à 24 volts.

Le circuit d'alimentation électrique 30 comporte également des éléments de commutation électrique, tels que des relais, qui sont configurés pour être commutés entre un état d'excitation et un état de repos, et qui permettent ici de modifier la façon dont chacun des moteurs M1 et M2 est connecté au reste du circuit d'alimentation électrique 30.

Ces éléments de commutation électrique, qui portent ici les références K1-1, K2-1, K2-1 et K2-2, seront décrits plus en détail dans ce qui suit.

Dans cette description, il sera fait référence plus spécifiquement à des relais, mais l'invention est transposable à tout élément de commutation électrique approprié.

Le circuit d'alimentation électrique 30 est également connecté à une masse électrique GND et à un rail d'alimentation électrique Vcc.

Par exemple, le rail d'alimentation électrique Vcc fournit au circuit d'alimentation électrique 30 une tension électrique continue régulée, par exemple une tension de 25 volts DC, ou de 5 volts DC, ou de 3,3 volts DC.

Le rail d'alimentation électrique Vcc peut être alimenté par une source d'alimentation électrique interne (telle qu'une batterie) ou externe (telle qu'une alimentation secteur), par exemple par l'intermédiaire d'un convertisseur de puissance.

Le rail d'alimentation électrique Vcc forme ici une référence de tension du circuit d'alimentation électrique 30.

Le circuit d'alimentation électrique 30 comprend des éléments de commutation électrique, tels que des relais notés K1-1, K2-1, K2-1 et K2-2 permettant la connexion du moteur M1 et, le cas échéant, du moteur M2, au reste du circuit d'alimentation électrique 30.

Les éléments de commutation électrique peuvent être constitués d'un premier relais K1 comportant deux contacts électriques K1-1 et K1-2 et d'un deuxième relais K2 comportant les contacts électriques K2-1 et K2-2.

Comme expliqué précédemment, chacun des relais K1 et K2 (et donc chacun des contacts K1-1, K2-1, K2-1 et K2-2) est commutable entre un premier état, dit état excité, ou état d'excitation, et un deuxième état, dit état de repos. La commutation entre ces deux états peut être pilotée par le processeur 22, par exemple au moyen d'un signal électrique de commande envoyé vers les relais K1 et K2.

Dans des variantes non décrites en détail, les deux relais K1 et K2 (ayant chacun plusieurs contacts électriques) pourraient être remplacés par plusieurs relais individuels. Ainsi, le circuit d'alimentation électrique 30 pourrait comporter quatre relais distincts K1-1, K2-1, K2-1 et K2-2 pouvant être commandés indépendamment par quatre signaux de commande.

Toutefois, ces quatre relais K1-1, K2-1, K2-1 et K2-2 pourraient être commandés conjointement par paires afin d'obtenir un même fonctionnement que dans le mode de réalisation avec deux relais K1 et K2. Par exemple, les relais K1-1 et K1-2 seraient commandés de façon simultanée, par exemple avec un même signal de commande, tandis que les relais K2-1 et K2-2 seraient commandés de façon simultanée, par exemple avec un même autre signal de commande.

Dans le mode de réalisation illustré sur la figure 3, le circuit d'alimentation électrique 30 comprend un pont 32 auquel sont connectés les contacts K1-1, K2-1, K2-1 et K2-2.

Le circuit d'alimentation électrique 30 comprend :
- des premiers éléments de connexion électrique 34, aussi nommés connecteurs électriques ou terminaux de connexion ou électrodes, configurés pour connecter électriquement le premier moteur électrique M1 au circuit d'alimentation électrique, et
- des deuxièmes éléments de connexion électrique 38, aussi nommés connecteurs électriques ou terminaux de connexion ou électrodes, configurés pour connecter électriquement le deuxième moteur électrique M2 au circuit d'alimentation électrique.

En pratique, de façon optionnelle, bien que cela ne soit pas illustré sur les figures, les connecteurs électriques 34 et 38 peuvent être chacun raccordés au reste du circuit d'alimentation électrique par des inductances de mode commun.

Le circuit d'alimentation électrique 30 est configuré pour connecter électriquement les premier et deuxième moteurs électriques tête-bêche par l'intermédiaire d'éléments de commutation électrique,
- lorsque le premier moteur électrique M1 est connecté électriquement aux premiers éléments de connexion électrique 34 et que le deuxième moteur électrique M2 est connecté électriquement aux deuxièmes éléments de connexion électrique 38, et
- lorsque les éléments de commutation électrique K1-1, K1-2, K2-1, K2-2 sont commutés dans l'état de repos.

Par exemple, les contacts K1-1 et K2-1 sont raccordés au premier moteur M1 par l'intermédiaire des premiers éléments de connexion électrique 34 (connecteurs ou terminaux de connexion M1+ et M1-).

On distingue notamment un premier terminal de connexion positif M1+ associé à une borne positive du premier moteur M1 et un premier terminal de connexion négatif M1-associé à une borne négative du premier moteur M1.

Par exemple, le contacts K1-1 est connecté au premier terminal positif M1+ et le relais K2-1 est connecté au premier terminal négatif M1-.

Toujours dans cet exemple, les contacts K2-1 et K2-2 sont raccordés au deuxième moteur M2 par l'intermédiaire des deuxièmes éléments de connexion électrique 38 (connecteurs ou terminaux de connexion M2+ et M2-).

On distingue notamment un deuxième terminal de connexion positif M2+ associé à une borne positive du deuxième moteur M2 et un deuxième terminal de connexion négatif M2- associé à une borne négative du deuxième moteur M2.

Par exemple, le relais K1-2 est connecté au deuxième terminal positif M2+ et le relais K2-2 est connecté au deuxième terminal négatif M2-.

Dans cet exemple, dans l'état d'excitation, les relais K1 et K2 connectent les éléments de connexion électrique 34, 38 correspondants au rail d'alimentation électrique Vcc, alors que dans l'état de repos, les relais connectent les éléments de connexion électrique 34, 38 correspondants par paires à un premier ou à un deuxième point commun, qui dans l'exemple illustré peut être connecté à un circuit de mesure de tension 46 ou 66, comme cela sera décrit plus en détail ci-après.

Comme expliqué précédemment, les moteurs M1 et M2 sont connectés tête-bêche, ou dit de manière classique, connectés en antiparallèle, lorsque les relais K1 et K2 (et donc les contacts K1-1 , K1-2, K2-1, K2-2) sont dans l'état de repos.

Par « connectés tête-bêche », on entend ici que les éléments de connexion électrique 34 et 38 sont raccordés au sein du circuit d'alimentation électrique 30 de telle sorte que le premier terminal positif M1+ du premier moteur M1 est connecté au deuxième terminal négatif M2- du deuxième moteur M2, et que le premier terminal négatif M1- du premier moteur M1 est connecté au deuxième terminal positif M2+ du deuxième moteur M2.

Avec une telle configuration, le deuxième moteur M2 est donc configuré pour recevoir entre ses bornes (c'est-à-dire entre les éléments de connexion 38 et donc entre les terminaux de connexion M2+ et M2-) une tension électrique qui est l'opposé de la tension électrique reçue au même moment par le premier moteur M1 entre ses bornes (c'est-à-dire entre les éléments de connexion 34 et donc entre les terminaux de connexion M 1 + et M1-).

Sur la figure 3, la flèche associée au premier moteur M1 illustre le sens de rotation nominal du premier moteur M1 lorsqu'une différence de potentiel positive est appliquée entre le premier terminal positif M1+ et le premier terminal négatif M1-. La flèche associée au deuxième moteur M2 illustre le sens de rotation du deuxième moteur M2 lorsque, du fait que les moteurs sont connectés tête-bêche parce que les relais K1 et K2 sont dans l'état de repos, cette différence de potentiel est appliquée entre le deuxième terminal positif M2+ et le deuxième terminal négatif M2-.

Le circuit d'alimentation électrique 30 peut comprendre plusieurs entrées et sorties pour recevoir ou envoyer des signaux électriques, par exemple des signaux de mesure et/ou des signaux de commande.

Les entrées et les sorties sont, par exemple, connectées à des sorties et à des entrées correspondantes du processeur 22, éventuellement par l'intermédiaire de convertisseurs analogiques/ numériques ou par tout dispositif approprié.

Le dispositif électronique de contrôle 10 est notamment configuré pour, lorsque le dispositif d'entraînement motorisé est à l'arrêt et que le portail est normalement dans une position terminale prédéfinie, détecter un déplacement inopiné de l'écran, à partir d'une mesure de la tension électrique aux bornes d'un des moteurs M1 ou M2, c'est-à-dire entre les premiers terminaux de connexion 34 ou entre les deuxièmes terminaux de connexion 38 décrits ci-après.

Par exemple, le circuit d'alimentation électrique 30 comprend :
- optionnellement, deux sorties de mesure de courant, ici notées I-A et I-B, pour transmettre un signal représentatif d'un premier courant et d'un deuxième courant électrique mesurés dans le circuit d'alimentation électrique 30 ;
- deux sorties de mesure de tension, ici notées MES_U-A et MES_U-B, pour transmettre un signal représentatif d'une première tension et d'une deuxième tension électrique mesurés dans le circuit d'alimentation électrique 30 ;
- deux entrées de signal de commande d'actionnement, notées PWM-A et PWM-B, pour recevoir un premier signal de commande et un deuxième signal de commande servant à piloter les moteurs M1 et M2, par exemple avec une technique de modulation de largeur d'impulsion (PWM) ;
deux entrées de signal de commande de freinage, notées FR-A et FR-B, pour recevoir un premier signal de commande de freinage et un deuxième signal de commande de freinage pour freiner les moteurs lorsqu'un relais est excité.

Par ailleurs, dans cet exemple, si seul le premier relais K1 est excité, alors le premier signal de commande de freinage FR-A permet de freiner le deuxième moteur M2 tandis que le deuxième signal de commande de freinage FR-B permet de freiner le premier moteur M1. Si seul le deuxième relais K2 est excité, alors le premier signal de commande de freinage FR-A permet de freiner le premier moteur M1 tandis que le deuxième signal de commande de freinage FR-B permet de freiner le deuxième moteur M2.

De façon générale, le circuit d'alimentation électrique 30 est configuré pour détecter un déplacement de l'écran 4 à partir d'une mesure de la tension électrique entre au moins l'un des éléments de connexion électrique K1-1, K1-2, K2-1, K2-2 et une référence de tension du circuit d'alimentation électrique (ici le rail d'alimentation Vcc), lorsque les éléments de commutation électrique sont commutés dans l'état de repos.

Le circuit d'alimentation électrique 30 comprend ici un premier circuit (ou étage) de mesure du courant 42, un premier circuit de commande en freinage 44, un premier circuit de mesure de tension 46 et un premier circuit de pilotage 48 des moteurs.

Le circuit d'alimentation électrique 30 comprend également un deuxième circuit (ou étage) de mesure du courant 62, un deuxième circuit de commande en freinage 64, un deuxième circuit de mesure de tension 66 et un deuxième circuit de pilotage 68 des moteurs.

Les deuxièmes circuits 62 à 68 sont ici semblables, voire identiques, aux premiers circuits 42 à 48, tant dans leur construction que dans leur fonction, et sont par exemple construits symétriquement par rapport aux premiers circuits 42 à 48.

Ainsi, dans un souci de concision, les deuxièmes circuits 62 à 68 ne seront pas décrits en détails et on pourra se référer à la description détaillée des premiers circuits 42 à 48 qui va être faite ci-après.

Par exemple, le premier circuit de mesure du courant 42 comprend deux transistors bipolaires 50 et 52 connectés de manière à former un montage dit en miroir de courant.

En l'occurrence, les bases respectives des transistors 50 et 52 sont connectées l'une avec l'autre. L'émetteur du transistor 52 est connecté au rail d'alimentation Vcc par l'intermédiaire d'un shunt de mesure, et aux électrodes correspondantes des contacts K1-1 et K2-2 (c'est-à-dire l'électrode de chacun de ces relais qui permet de mettre en contact le terminal correspondant du moteur M1 ou M2 avec le rail d'alimentation Vcc (à travers le shunt de mesure) lorsque le relais est dans le premier état). Le collecteur du transistor 52 est connecté à la masse électrique GND. La sortie du circuit 42 est connectée à la sortie I-B.

Le deuxième circuit de mesure du courant 62 est similaire et comprend deux transistors bipolaires 70 et 72 qui jouent, respectivement, le même rôle que les transistors bipolaires 50 et 52 du circuit 42, vis-à-vis des contacts K2-1 et K1-2 des relais K1 et K2. La sortie du circuit 42 est connectée à la sortie I-A.

Dans certains modes de réalisation, les circuits de mesure de courant 42 et 62 peuvent être omis, de même que les sorties I-A et I-B correspondantes.

Le circuit 30 comprend des transistors T1, T2, T3 et T4.

Les transistors T1, T2, T3 et T4 sont par exemple des transistors à effet de champ, tels que des transistors MOSFET (« Metal-Oxide Semiconductor Field Effect Transistor » en anglais).

Le transistor T1 est connecté entre la masse GND et un premier point de raccordement commun qui met en communication les contacts K1-1 et K2-2 des relais K1 et K2 avec le rail d'alimentation Vcc. L'électrode de commande du transistor T1 est connectée, par le circuit de pilotage 48, à la première entrée de commande PWM-A.

Ainsi, le transistor T1, lorsqu'il est commandé dans l'état passant par le premier signal de commande de pilotage, permet d'alimenter les moteurs M1 ou M2 suivant lequel des relais K1 et K2 est dans l'état excité.

Par exemple, le transistor T1, lorsqu'il est commandé dans l'état passant, met en contact les terminaux M1+ ou M2+ raccordées aux moteurs M1 et M2 avec la masse, pour autant que le relais K1 ou K2 soit dans l'état excité.

Le transistor T3 joue un rôle similaire, permettant de mettre en contact les terminaux M1- ou M2- avec la masse, suivant lequel des 2 relais K1 et K2 est dans l'état excité.

Le transistor T2 est connecté en série avec une résistance R1 du premier circuit de freinage 44, la résistance R1 et le transistor T2 étant ici connectés en parallèle avec la première diode D1. La résistance R1 est notamment connectée, par une de ses bornes, au premier point de raccordement commun.

L'électrode de commande du transistor T2 est connectée, par le premier circuit de commande de freinage 44, à la première entrée de commande de freinage FR-A.

Lorsque le transistor T2 est dans l'état passant, la résistance R1 est connectée en série avec le moteur M1 ou M2 et permet de freiner électriquement le moteurs M1 ou M2 suivant si le relais K2 ou K1 est dans l'état excité.

De façon analogue, le transistor T4 est connecté en série avec une résistance R2 du deuxième circuit de freinage 64, la résistance R2 et le transistor T4 étant ici connectés en parallèle avec la deuxième diode D2. La résistance R2 est notamment connectée, par une de ses bornes, au premier point de raccordement commun. L'électrode de commande du transistor T4 est connectée, par le deuxième circuit de commande de freinage 64, à la première entrée de commande de freinage FR-B.

Dans de nombreux modes de réalisation, le premier circuit de mesure de tension 46 comprend un pont diviseur de tension, comportant par exemple deux résistances électriques, ledit pont diviseur étant connecté entre, d'une part, le premier point de raccordement commun qui met en communication les contacts K1-1 et K2-2 des relais K1 et K2 et, d'autre part, la masse électrique GND. Le signal de mesure obtenu par le pont diviseur est ensuite envoyé vers la sortie de mesure MES_U-A.

Le deuxième circuit de mesure de tension 66 est construit de façon analogue, en référence au deuxième point de raccordement commun qui met en communication les contacts K2-1 et K1-2 des relais K1 et K2 et la deuxième sortie de mesure MES_U-B.

Comme expliqué ci-dessus, les moteurs M1 et M2 sont connectés en antiparallèle, c'est-à-dire tête bêche, lorsque les relais ne sont pas excités.

Notamment, grâce à la configuration du circuit d'alimentation 30, les moteurs M1 et M2 sont connectés de manière à tourner dans des sens opposés s'ils devaient être entrainés à tourner par une action mécanique (pas électrique), lorsque les relais ne sont pas excités. Par contre, les moteurs M1 et M2 sont connectés de manière à tourner dans le même sens lorsque le relais K1 ou K2 est excité, et que le mouvement est d'origine électrique.

Le sens de rotation des moteurs M1 et M2 (lorsque leur rotation a une cause électrique, et donc volontaire) est choisi au moyen des relais K1 et K2.

Par ailleurs, les signaux de commande sont choisis de manière à ne pas piloter en même temps les transistors T1 et T2 (respectivement T3 et T4). Cela provoquerait des surintensités destructrices.

Par exemple, dans une configuration de fonctionnement, pour fermer les ouvrants, le relais K2 est excité. C'est à dire que le contact K2-1 connecte la borne - du moteur M1 au rail d'alimentation VCC, tandis que le contact K2-2 connecte la borne négative du moteur M2 au rail d'alimentation VCC Le premier moteur M1 est piloté par le transistor T1 piloté par le premier signal de commande PWM-A tandis que le second moteur M2 est piloté par le transistor T3 piloté par le second signal de commande PWM-B.

Dans le sens inverse, c'est-à-dire à l'ouverture, le premier moteur M1 est piloté par le transistor T3 lui-même piloté par le signal de commande PWM-B.

Le tableau ci-dessous résume des stratégies de commande possibles. Le symbole « X » figurant dans les cases du tableau indique que le signal identifié dans la ligne supérieure est présent (mesuré ou appliqué).

Les lignes correspondant aux « corrections » correspondent au cas où le dispositif d'entraînement motorisé corrige la position de l'écran pour le ramener dans une position cible (par exemple la position fermée) après que l'écran ait subi un déplacement intempestif (dû à une action manuelle ou à un coup de vent, par exemple).

La colonne correspondant au relais « K1 » indique, lorsque le symbole « X » est présent, que l'on excite à la fois le relais K1 (c'est-à-dire que les contacts K1-1 et K1-2 sont dans l'état correspondant à l'état excité). Par exemple il peut s'agir d'un relais à deux contacts.

**[Table 1]**

| | Pilotage relais | | Pilotage moteurs | | Freinage moteurs | | Mesure tension | | Mesure courant | |
|---|---|---|---|---|---|---|---|---|---|---|
| | K1 | K2 | PWM-A | PWM-B | FR-A | FR-B | MES_U-A | MES_U-B | I_A | I_B |
| M1 ouverture | X | | | X | | X | | X | X | |
| M2 ouverture | X | | X | | X | | X | | | X |
| M1 fermeture | | X | X | | X | | X | | | X |
| M2 fermeture | | X | | X | | X | | X | X | |
| Correction M1 portail ouvert | X | | | X | | X | | X | X | |
| Correction M2 portail ouvert | X | | X | | X | | X | | | X |
| Correction M1 portail fermé | | X | X | | X | | X | | | X |
| Correction M2 portail fermé | | X | | X | | X | | X | X | |

Dans le tableau ci-dessus, comme expliqué plus haut, par exemple dans la ligne « M1 Ouverture », on actionne soit le pilotage PWM-B pour ouvrir le battant, soit le frein FR-B pour le ralentir, mais pas les deux simultanément. De même pour PWM-A et FR-A.

Dans certains cas particuliers, on peut toutefois temporairement activer les transistors T1 et T3 simultanément, avec les relais non excités, par exemple lorsque le portail est immobilisé à mi-course d'ouverture. Cela permet de mettre les moteurs en court-circuit, et donc d'assurer un freinage maximal, avec toutefois la perte de toute détection de mouvement.

Par exemple, lorsque le portail est fermé et les relais non excités et que le premier moteur M1 est sollicité à l'ouverture, alors le deuxième moteur M2 tourne à l'opposé jusqu'à rencontrer une butée mécanique qui empêche tout mouvement. Le premier moteur M1 est alors shunté par la résistance interne du deuxième moteur M2.

Les sorties MES_U-A et MES_U-B donnent des tensions représentatives des tensions aux bornes 34, 38 des moteurs M1 et M2, respectivement, quel que soit le sens de rotation choisi pour les moteurs, puisque pour chaque moteur au moins un des relais K1 ou K2 correspondant (contacts K1-1 ou K2-1 pour le premier moteur M1, contacts K2-2 ou K1-2 pour le deuxième moteur M2) est toujours connecté à l'un des circuits de mesure de tension 46 ou 48.

Lorsque le système est au repos, comme illustré sur la figure 3, les relais K1 et K2 sont tous au repos et mettent donc les connecteurs 34, 38 en communication avec le premier point de raccordement commun et le deuxième point de raccordement commun. Les transistors T1, T2, T3 et T4 sont tous au repos, c'est-à-dire dans un étant bloquant empêchant le passage du courant.

Dans cette configuration, le moteur non entraîné sert de résistance de freinage au moteur qui est entraîné par un déplacement de l'écran 4 (ce déplacement pouvant être manuel ou résulter d'un coup de vent, par exemple).

La résistance de chaque moteur est, par exemple, due à la résistance électrique des bobines de ce moteur. Cette résistance électrique peut, à titre d'exemple, être de l'ordre de quelques ohms, par exemple 3 ohms.

L'avantage de cette configuration est que, sans excitation de relais coûteuse en énergie, le moteur M1 est chargé par une faible résistance électrique (celle du moteur M2), ce qui assure un bon freinage, tout en permettant une détection de mouvement par la mesure de la tension aux bornes du moteur.

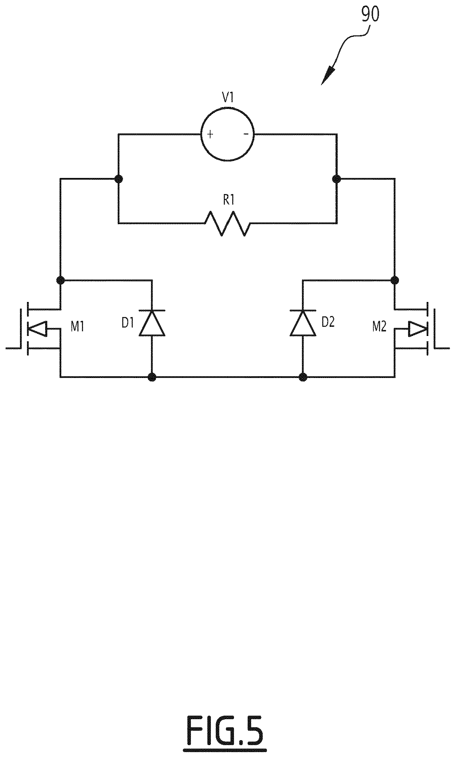

La figure 5 illustre schématiquement un exemple de circuit électrique équivalent 90 formé par l'association des moteurs M1 et M2 dans une telle configuration lorsqu'un des deux moteurs est entraîné.

Sur cette figure 5, les références affectées aux composants du circuit équivalent 90 ne sont pas nécessairement les mêmes que sur la figure 3.

Par exemple, dans le schéma équivalent 90, le moteur qui subit le déplacement et voit ainsi une tension apparaître à ses bornes est représenté comme générateur de tension V1, alors que l'autre moteur est représenté comme une résistance R1. Les transistors M1 et M2 représentent respectivement les transistors notés T1 et T3 sur la figure 3, et les diodes D1 et D2 représentent les diodes parasites respectives de ces transistors T1 et T3.

Par exemple, dans le cas d'un portail fermé, relais non excités. Si le vent (ou tout autre action mécanique d'origine extérieure) ouvre le battant commandé par M1, une tension apparait entre ses bornes M1+ et M1-, le côté positif étant celui de M1+.

Cette tension tend à fermer le moteur M2, qui ne bouge pas, étant déjà fermé.

Mesure de cette tension : en plus du courant principal qui tourne entre M1 et M2, un faible courant va circuler depuis M1+ à travers le pont diviseur du circuit 46, la masse, et retourner sur M1- à travers la diode parasite de T3. De ce fait, la tension sur le drain de T1 est égale à la tension aux bornes de M1 moins la chute de tension aux bornes d'une diode.

La tension ainsi mesurée est détectée sur l'une ou sur l'autre des sorties de mesure MES_U-A ou MES_U-B. Par exemple, cette tension peut être comprise dans un intervalle spécifique de tension, par exemple compris entre 0 volts et -0,5 volts.

Ainsi, une surveillance peut être mise en oeuvre en détectant l'apparition d'une tension mesurée comprise dans cet intervalle prédéfini.

Grâce à l'invention, il est possible de mesurer la tension électrique aux bornes d'un moteur même lorsque les relais sont au repos, tout en disposant d'un freinage « naturel » dû à la charge représentée par l'autre moteur qui est bloqué, du fait de son câblage en sens inverse. On peut donc détecter un mouvement indésirable du portail, sans pour autant engendrer une consommation électrique superflue. Au contraire, dans les dispositifs connus, il est nécessaire de laisser un ou plusieurs relais dans un état excité afin de pouvoir mesurer la tension aux bornes du moteur.

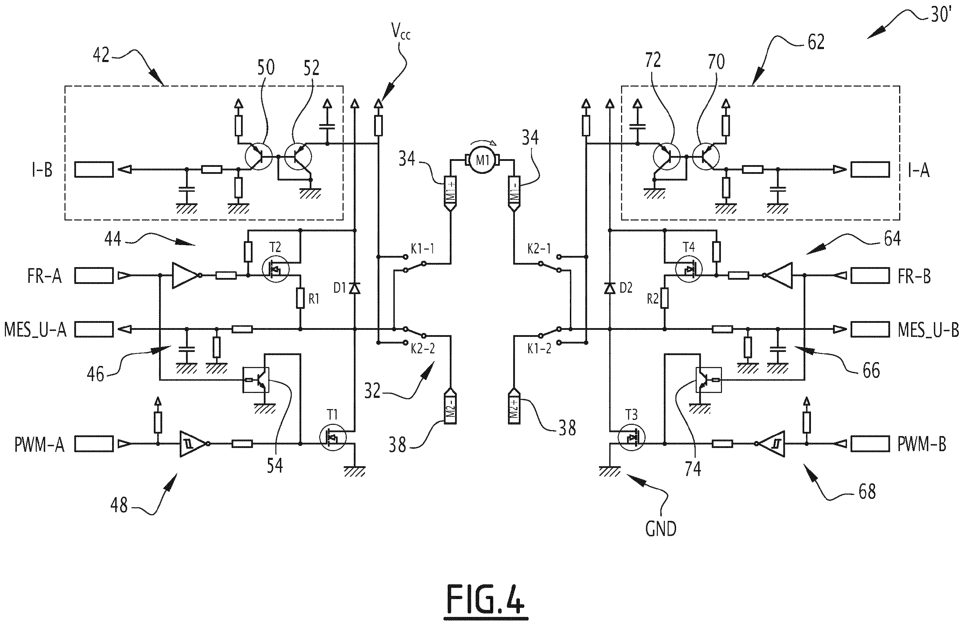

La figure 4 représente un mode de réalisation ne faisant pas partie de l'invention.

Sur la figure 4, le circuit d'alimentation 30' est identique au circuit d'alimentation 30 et n'en diffère que par le fait que le deuxième moteur M2 est omis. Seul le premier moteur M1 est utilisé pour mouvoir l'écran 4. Par exemple, ce mode de réalisation convient aux écrans comportant un seul montant 4a ou 4b.

Bien que dans ce cas le dispositif d'actionnement motorisé ne comprend qu'un seul moteur, le circuit 30' reste configuré pour connecter deux moteurs M1 et M2 en antiparallèle.

Dans ce cas de figure, lorsque l'écran est arrivé en butée dans une position d'ouverture ou de fermeture, le processeur 22 pourrait être programmé pour maintenir les transistors T1 et T3 dans leur état passant pour court-circuiter le premier moteur M1 en permanence, ce qui lui assure un effet de freinage maximal du vantail. Dans ce cas, le procédé peut être inhibé car il n'est alors pas possible de détecter un mouvement du moteur.

Avantageusement, au démarrage ou à la mise en service de l'installation domotique, une opération de détermination du nombre de moteurs peut être mise en oeuvre automatiquement.

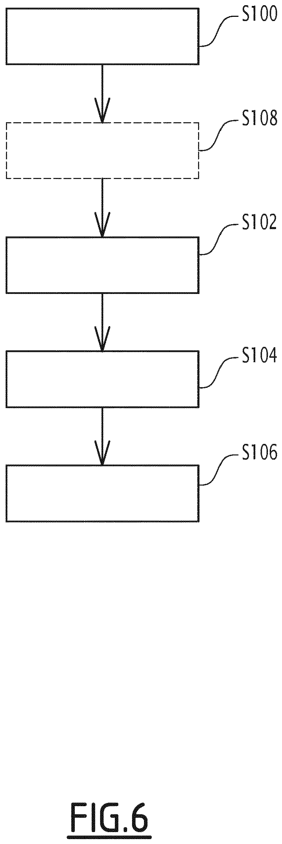

Un exemple de mise en oeuvre d'un mode de réalisation du procédé conforme à l'invention est maintenant décrit en référence à la Figure 6.

Le procédé est démarré lors d'une étape S100.

Ensuite, lors d'une étape S102, au moins un des deux écrans 4a, 4b est déplacé par le dispositif d'entraînement motorisé vers une position cible, par exemple vers une position terminale, ou position d'extrémité, comme par exemple une position d'ouverture ou une position de fermeture.

A l'issue de l'étape S102, le au moins un des deux écrans 4a, 4b est dans la position cible.

Le dispositif électronique de contrôle 10 commence alors à surveiller si au moins un des deux écrans 4a, 4b se déplace de façon inopinée par rapport à cette position.

Par exemple, les relais K1 et K2 sont mis au repos (c'est-à-dire qu'ils ne sont pas excités).

Les transistors T1, T2, T3 et T4 sont mis dans leur état de repos (par exemple un étant bloquant).

Le dispositif électronique de contrôle 10 bascule le dispositif d'entraînement vers un mode de fonctionnement dit de veille.

Par exemple, le mode de fonctionnement de veille est utilisé lorsque les écrans 4a, 4b sont supposés rester en position, parce qu'aucun ordre de mise en mouvement n'est reçu. Dans ce mode de fonctionnement de veille, le dispositif d'entraînement motorisé fonctionne avec une consommation d'énergie électrique réduite. Pour cela, certains fonctionnalités ou composants peuvent être désactivés temporairement. Notamment, dans le mode de veille, les moteurs ne sont normalement pas commandés, c'est-à-dire qu'aucun mouvement n'est imposé à l'écran par le dispositif d'entraînement motorisé.

Par opposition, le dispositif d'entraînement motorisé peut aussi fonctionner dans un mode de fonctionnement normal, dans lequel les constituants du dispositif d'entraînement motorisé sont normalement alimentés en énergie électrique. Ce mode de fonctionnement normal est par exemple utilisé lorsque l'on alimente les moteurs électriques pour déplacer l'écran.

Ensuite, pour mettre en oeuvre la surveillance des écrans 4a, 4b, lors d'une étape S104, qui peut être répétée au cours du temps, par exemple répétée périodiquement, le dispositif électronique de contrôle 10 vérifie si une tension électrique est détectée aux bornes d'au moins des moteurs M1 et M2.

Par exemple, le dispositif électronique de contrôle 10 mesure la tension en sortie MES_U-A et MES_U-B des bornes des circuits de mesure 46 et 66.

Cette tension peut être comparée à un intervalle de valeurs de tensions prédéfinies, comme expliqué ci-dessus, pour vérifier si la tension mesurée appartient audit intervalle, une telle appartenance indiquant par exemple que le moteur génère une tension électrique à cause d'un déplacement inopiné de l'écran ou de la portion d'écran à laquelle il est mécaniquement couplé.

De préférence, le dispositif électronique de contrôle 10 identifie également le sens du déplacement anormal.

Si une telle tension électrique est détectée, alors lors d'une étape S106, le dispositif électronique de contrôle 10 identifie l'écran comme subissant un mouvement anormal. En réponse, un signal de commande est envoyé vers le circuit d'alimentation 30 pour corriger la position de l'écran, c'est-à-dire pour ramener l'écran dans la position terminale, en faisant tourner l'écran 4 dans le sens opposé au sens du déplacement anormal ainsi détecté.

Par exemple, si la position terminale que l'écran 4 aurait dû conserver est une position fermée, alors la correction a pour but de ramener l'écran 4 vers la position fermée.

Si aucun déplacement n'a été détecté, alors l'étape S104 peut être répétée, par exemple tant que le dispositif d'entraînement motorisé reste en mode de veille et/ou tant qu'aucun autre ordre de déplacement (par exemple, un ordre d'ouverture de l'écran) n'est reçu.

Une fois l'écran remis en place, l'étape S104 peut à nouveau être répétée pour détecter un nouveau déplacement inopiné de l'écran, par exemple tant que le dispositif d'entraînement motorisé reste en mode de veille et/ou tant qu'aucun autre ordre de déplacement n'est reçu.

En variante, les étapes pourraient être exécutées dans un ordre différent. Certaines étapes pourraient être omises. L'exemple décrit ne fait pas obstacle à ce que, dans d'autres modes de réalisation, d'autres étapes soient mises en oeuvre conjointement et/ou séquentiellement avec les étapes décrites.

De façon optionnelle, le procédé peut comprendre une étape S108 visant à détecter le nombre de moteurs, et à inhiber la mise en place de l'étape S104 si le dispositif électronique de contrôle 10 détecte que le dispositif d'entraînement motorisé ne comprend qu'un seul moteur M1, par exemple parce que le deuxième moteur M2 a été omis.

L'étape S108 peut être mise en oeuvre au démarrage ou suite à la mise en service de l'installation domotique de fermeture, par exemple par un installateur.

## Revendications

1. Dispositif d'entraînement motorisé pour une installation domotique de fermeture (2), l'installation domotique de fermeture comprenant un premier écran (4a) et un deuxième écran (4b), le dispositif d'entraînement motorisé comprenant :
- un premier actionneur électromécanique (8), le premier actionneur électromécanique comprenant un premier moteur électrique (M1) et étant configuré pour entraîner en mouvement le premier écran (4a),
- un deuxième actionneur électromécanique (8), le deuxième actionneur électromécanique comprenant un deuxième moteur électrique (M2) et étant configuré pour entraîner en mouvement le deuxième écran (4b), et
- un dispositif électronique de contrôle (10), le dispositif électronique de contrôle comprenant au moins un circuit d'alimentation électrique (30), le circuit d'alimentation électrique comprenant au moins :
- des premiers éléments de connexion électrique (34), les premiers éléments de connexion électrique étant configurés pour connecter électriquement le premier moteur électrique (M1) du premier actionneur électromécanique au circuit d'alimentation électrique,
- des deuxièmes éléments de connexion électrique (38), les deuxièmes éléments de connexion électrique étant configurés pour connecter électriquement le deuxième moteur électrique (M2) du deuxième actionneur électromécanique au circuit d'alimentation électrique, et
- des éléments de commutation électrique (K1-1, K1-2, K2-1, K2-2), les éléments de commutation électrique étant configurés pour être commutés entre un état d'excitation et un état de repos,
**caractérisé en ce que** le circuit d'alimentation électrique (30) est configuré pour connecter électriquement les premier et deuxième moteurs électriques tête-bêche par l'intermédiaire des éléments de commutation électrique,
- lorsque le premier moteur électrique (M1) est connecté électriquement aux premiers éléments de connexion électrique (34) et que le deuxième moteur électrique (M2) est connecté électriquement aux deuxièmes éléments de connexion électrique (38), et
- lorsque les éléments de commutation électrique (K1-1, K1-2, K2-1, K2-2) sont commutés dans l'état de repos,
et **en ce que** le circuit d'alimentation électrique (30) est configuré pour détecter un déplacement d'au moins un des écrans (4a, 4b) à partir d'une mesure de la tension électrique entre au moins l'un des éléments de connexion électrique (K1-1, K1-2, K2-1, K2-2) et une référence de tension du circuit d'alimentation électrique (Vcc), lorsque les éléments de commutation électrique sont commutés dans l'état de repos.

2. Dispositif selon la revendication 1, dans lequel le dispositif de contrôle électronique est également configuré pour, lorsqu'un déplacement inopiné d'au moins un des écrans (4a, 4b) a été détecté, envoyer un signal de commande pour actionner au moins un moteur électrique de façon à corriger la position de l'écran.

3. Dispositif selon l'une quelconque des revendications 1 à 2, dans lequel le circuit d'alimentation électrique comporte un premier circuit de mesure de tension (46) et un deuxième circuit de mesure de tension (66) connectés respectivement à un premier point de raccordement commun entre certains desdits éléments de connexion électrique et la référence de tension du circuit d'alimentation électrique, et un deuxième point de raccordement commun entre les autres éléments de connexion électrique et la référence de tension du circuit d'alimentation électrique.

4. Dispositif selon la revendication 3, dans lequel chacun desdits circuits de mesure de tension (46, 66) comporte un pont diviseur de tension.

5. Dispositif selon l'une quelconque des revendications 1 à 4, dans lequel le dispositif d'entraînement motorisé est un dispositif réversible.

6. Dispositif selon l'une quelconque des revendications 1 à 5, dans lequel le dispositif d'entraînement motorisé est configuré pour fonctionner dans un mode de fonctionnement en veille à basse consommation d'énergie électrique, la détection de mouvement étant mise en oeuvre lorsque le dispositif d'entraînement motorisé est dans le mode de fonctionnement en veille.

7. Dispositif selon la revendication 6, dans lequel, en veille, l'un des deux moteurs électriques (M1, M2) est utilisé comme charge électrique, afin de freiner l'autre moteur électrique, tout en permettant la mesure de la tension commune aux bornes des moteurs, les relais étant dans l'état de repos.

8. Installation domotique de fermeture (2) comportant deux écrans (4a, 4b) et un dispositif d'entraînement motorisé conforme à l'une quelconque des revendications 1 à 7.

9. Installation domotique de fermeture selon la revendication 8, dans laquelle les écrans comportent au moins un battant mobile en rotation autour d'un arbre de rotation essentiellement vertical.

10. Installation domotique de fermeture selon la revendication 8 ou la revendication 9, dans laquelle les écrans sont des portails battants ou des volets battants.

11. Installation domotique de fermeture selon l'une quelconque des revendications 8 à 10, dans laquelle les moteurs sont des moteurs électriques à courant continu.

12. Procédé de commande d'un dispositif d'entraînement motorisé conforme à l'une quelconque des revendications 1 à 7, ce procédé comportant des étapes consistant à :
- déplacer au moins un des écrans (4a, 4b) dans une position prédéterminée, telle qu'une position d'extrémité, au moyen du dispositif d'entraînement motorisé
- lorsque ledit au moins un des écrans (4a, 4b) est dans la position d'extrémité et que le dispositif d'entraînement motorisé est dans un mode de veille, dans lequel les moteurs ne sont pas commandés, détecter un déplacement dudit au moins un des écrans (4a, 4b) en détectant l'apparition d'une tension électrique entre au moins l'un des éléments de connexion électrique et une référence de tension du circuit d'alimentation électrique, lorsque les éléments de commutation électrique sont commutés dans l'état de repos.

## Patentansprüche

1. Motorisierte Antriebsvorrichtung für eine Hausschließanlage (2), wobei die Hausschließanlage eine erste Abschirmung (4a) und eine zweite Abschirmung (4b) umfasst, wobei die motorisierte Antriebsvorrichtung umfasst:
- einen ersten elektromechanischen Aktuator (8), wobei der erste elektromechanische Aktuator einen ersten Elektromotor (M1) umfasst und derart ausgelegt ist, dass er die erste Abschirmung (4a) in Bewegung versetzt,
- einen zweiten elektromechanischen Aktuator (8), wobei der zweite elektromechanische Aktuator einen zweiten Elektromotor (M2) umfasst und derart ausgelegt ist, dass er die zweite Abschirmung (4b) in Bewegung versetzt, und
- eine elektronische Steuervorrichtung (10), wobei die elektronische Steuervorrichtung mindestens einen elektrischen Versorgungskreis (30) umfasst, wobei der elektrischen Versorgungskreis mindestens umfasst:
- erste elektrische Verbindungselemente (34), wobei die ersten elektrischen Verbindungselemente derart ausgelegt sind, dass sie den ersten Elektromotor (M1) des ersten elektromechanischen Aktuators mit dem elektrischen Versorgungskreis elektrisch verbinden,
- zweite elektrische Verbindungselemente (38), wobei die zweiten elektrischen Verbindungselemente derart ausgelegt sind, dass sie den zweiten Elektromotor (M2) des zweiten elektromechanischen Aktuators mit dem elektrischen Versorgungskreis elektrisch verbinden, und
- elektrische Schaltelemente (K1-1, K1-2, K2-1, K2-2), wobei die elektrischen Schaltelemente derart ausgelegt sind, dass sie zwischen einem Erregungszustand und einem Ruhezustand geschaltet werden,
**dadurch gekennzeichnet, dass** der elektrische Versorgungskreis (30) derart ausgelegt ist, dass er den ersten und den zweiten Elektromotor über die elektrischen Schaltelemente elektrisch antiparallel verbindet,
- wenn der erste Elektromotor (M1) mit den ersten elektrischen Verbindungselementen (34) elektrisch verbunden ist und der zweite Elektromotor (M2) mit den zweiten elektrischen Verbindungselementen (38) elektrisch verbunden ist, und
- wenn die elektrischen Schaltelemente (K1-1, K1-2, K2-1, K2-2) in den Ruhezustand geschaltet sind,
und dass der elektrische Versorgungskreis (30) derart ausgelegt ist, dass er eine Bewegung von mindestens einer der Abschirmungen (4a, 4b) ausgehend von einer Messung der elektrischen Spannung zwischen mindestens einem der elektrischen Verbindungselemente (K1-1, K1-2, K2-1, K2-2) und einer Spannungsreferenz des elektrischen Versorgungskreises (Vcc) zu ermitteln, wenn die elektrischen Schaltelemente in den Ruhezustand geschaltet sind.

2. Vorrichtung nach Anspruch 1, wobei die elektronische Steuervorrichtung ebenfalls ausgelegt ist, dass sie, wenn eine unbeabsichtigte Bewegung von mindestens einer der Abschirmungen (4a, 4b) erfasst wurde, ein Steuersignal sendet, um mindestens einen Elektromotor anzutreiben, um die Position der Abschirmung zu korrigieren.

3. Vorrichtung nach einem der Ansprüche 1 bis 2, wobei der elektrische Versorgungskreis einen ersten Spannungsmesskreis (46) und einen zweiten Spannungsmesskreis (66) umfasst, die jeweils mit einem ersten gemeinsamen Anschlusspunkt zwischen einigen der elektrischen Verbindungselemente und der Spannungsreferenz des elektrischen Versorgungskreises und einem zweiten gemeinsamen Verbindungspunkt zwischen den anderen elektrischen Verbindungselementen und der Spannungsreferenz des elektrischen Versorgungskreises verbunden sind.

4. Vorrichtung nach Anspruch 3, wobei jeder der Spannungsmesskreise (46, 66) eine Spannungsteilerbrücke aufweist.

5. Vorrichtung einem der Ansprüche 1 bis 4, wobei die motorisierte Antriebsvorrichtung eine reversible Vorrichtung ist.

6. Vorrichtung nach einem der Ansprüche 1 bis 5, wobei die motorisierte Antriebsvorrichtung derart ausgelegt ist, dass sie in einem Standby-Betriebsmodus mit niedrigem Stromverbrauch arbeitet, wobei die Bewegungserkennung durchgeführt wird, wenn sich die motorisierte Antriebsvorrichtung in dem Standby-Betriebsmodus befindet.

7. Vorrichtung nach Anspruch 6, wobei im Standby einer der beiden Elektromotoren (M1, M2) als elektrische Last verwendet wird, um den anderen Elektromotor zu bremsen, während die gemeinsame Spannung an den Anschlüssen der Motoren gemessen werden kann, wobei sich die Relais im Ruhezustand befinden.

8. Hausschließanlage (2) mit zwei Abschirmungen (4a, 4b) und einer motorisierten Antriebsvorrichtung nach einem der Ansprüche 1 bis 7.

9. Hausschließanlage nach Anspruch 8, wobei die Abschirmungen mindestens einen Flügel aufweisen, der um eine im Wesentlichen vertikale Drehwelle drehbar beweglich ist.

10. Hausschließanlage nach Anspruch 8 oder Anspruch 9, wobei die Abschirmungen Flügeltore oder Flügelläden sind.

11. Hausschließanlage nach einem der Ansprüche 8 bis 10, wobei die Motoren elektrische Gleichstrommotoren sind.

12. Verfahren zur Steuerung einer motorisierten Antriebsvorrichtung nach einem der Ansprüche 1 bis 7, wobei das Verfahren die folgenden Schritte umfasst:
- Bewegen von mindestens einer der Abschirmungen (4a, 4b) in eine vorbestimmte Position, wie z. B. eine Endposition, mithilfe der motorisierten Antriebsvorrichtung,
- wenn sich die mindestens eine der Abschirmungen (4a, 4b) in der Endposition befindet und sich die motorisierte Antriebsvorrichtung in einem Standby-Modus befindet, in dem die Motoren nicht gesteuert werden, Erfassen einer Bewegung von der mindestens einen der Abschirmungen (4a, 4b) durch Erfassen des Auftretens einer elektrischen Spannung zwischen mindestens einem der elektrischen Verbindungselemente und einer Spannungsreferenz des elektrischen Versorgungskreises, wenn die elektrischen Schaltelemente in den Ruhezustand geschaltet sind.

## Claims

1. Motorised driving device for a home automation locking system (2), the home automation locking system comprising a first screen (4a) and a second screen (4b), the motorised drive device comprising:
- a first electromechanical actuator (8), the first electromechanical actuator comprising a first electric motor (M1) and being configured to move the first screen (4a),
- a second electromechanical actuator (8), the second electromechanical actuator comprising a second electric motor (M2) and being configured to move the second screen (4b), and
- an electronic control device (10), the electronic control device comprising at least one power supply circuit (30), the power supply circuit comprising at least:
- first electrical connection elements (34), the first electrical connection elements being configured to electrically connect the first electric motor (M1) of the first electromechanical actuator to the electrical supply circuit,
- second electrical connection elements (38), the second electrical connection elements being configured to electrically connect the second electric motor (M2) of the second electromechanical actuator to the power supply circuit, and
- electrical switching elements (K1-1, K1-2, K2-1, K2-2), the electrical switching elements being configured to be switched between an energised state and a rest state,
**characterised in that** the power supply circuit (30) is configured electrically to connect the first and second electric motors head-to-tail via the electrical switching elements,
- when the first electric motor (M1) is electrically connected to the first electrical connection elements (34) and the second electric motor (M2) is electrically connected to the second electrical connection elements (38), and
- when the electrical switching elements (K1-1, K1-2, K2-1, K2-2) are switched to the rest state,
and **in that** the power supply circuit (30) is configured to detect a displacement of at least one of the screens (4a, 4b) from a measurement of the electrical voltage between at least one of the electrical connection elements (K1-1, K1-2, K2-1, K2-2) and a voltage reference of the power supply circuit (Vcc), when the electrical switching elements are switched in the rest state.

2. A device as claimed in claim 1, wherein the electronic control device is also configured so as, when an unexpected displacement of at least one of the screens (4a, 4b) has been detected, to send a control signal to actuate at least one electric motor so as to correct the position of the screen.

3. A device according to any one of claims 1 to 2, in which the power supply circuit comprises a first voltage measurement circuit (46) and a second voltage measurement circuit (66) connected respectively to a first common connection point between some of the said electrical connection elements and the voltage reference of the power supply circuit, and a second common connection point between the other electrical connection elements and the voltage reference of the power supply circuit.

4. A device as claimed in claim 3, wherein each of said voltage measurement circuits (46, 66) comprises a voltage divider bridge.

5. A device according to any one of claims 1 to 4, wherein the motorised driving device is a reversible device.

6. A device according to any one of claims 1 to 5, wherein the motorised drive device is configured to operate in a low power consumption standby mode of operation, the motion detection being implemented when the motorised drive device is in the standby mode of operation.

7. A device according to claim 6, in which, in standby, one of the two electric motors (M1, M2) is used as an electrical load, in order to brake the other electric motor, while allowing measurement of the voltage common to the terminals of the motors, the relays being in the idle state.

8. Home automation closure system (2) comprising two screens (4a, 4b) and a motorised drive device according to any one of claims 1 to 7.

9. Home automation closure system according to claim 8, in which the screens comprise at least one leaf which can rotate about an essentially vertical rotation shaft.

10. Home automation closure system according to claim 8 or claim 9, in which the screens are swing gates or swing shutters.

11. Home automation locking system according to any one of claims 8 to 10, in which the motors are DC electric motors.

12. The method for controlling a motorised driving device in accordance with any of claims 1 to 7, consisting of steps to:
- move at least one of the screens (4a, 4b) to a predetermined position, such as an end position, by means of the motorised drive device
- when said at least one of the screens (4a, 4b) is in the end position and the motorised driving device is in a standby mode, in which the motors are not controlled, detecting a displacement of said at least one of the screens (4a, 4b) by detecting the occurrence of an electrical voltage between at least one of the electrical connection elements and a voltage reference of the power supply circuit, when the electrical switching elements are switched in the idle state.
